# EUROPEAN PATENT APPLICATION

(11) **EP 0 545 251 A2**
(43) Date of publication of application: **09.06.1993**
(21) Application number: 92120072.1
(22) Date of filing: 25.11.1992
(51) Int. Cl.: B29B 9/06, B26D 1/29

(54) **Blade supporting head for devices for granulating plastic material**

(30) Priority: 02.12.1991 IT BO910450
(71) Applicant: F.B.M. FABBRICA BONDENESE MACCHINE S.r.l., I-44012 Bondeno (Ferrara) (IT)
(72) Inventor: Garutti, Gianni, I-44028 Poggio Renatico (Ferrara) (IT); Monari, Claudio, I-44012 Bondeno (Ferrara) (IT)
(74) Representative: Modiano, Guido, Dr.-Ing.

(57) **Abstract**

The blade supporting head for devices for granulating plastic material comprises a supporting element (1,2) which can be fixed to a drive shaft in front of a nozzle, at least one cylindrical seat (5,6,7,8) which is defined in the support (1,2) and is arranged in a plane which is at right angles to the shaft, at least one pin (9) comprising a portion (9a) rotatably supported in the seat (5,6,7,8) and to which a radial elastic tongue (16) is coupled, and a portion which protrudes outside the seat (10a) and to which a blade (14) is rigidly coupled, screw means (20) being provided to load the tongue (16) so as to move the cutting edge of the blade (14) into contact with the skimming surface of the nozzle.

## Description

The present invention relates to a blade supporting head for use in devices for granulating plastic materials.

Current blade supporting heads, which are used at the output of the extrusion nozzle, have the problem of complicated adjustment of the pressure with which the blades skim the surface of the nozzle.

The aim of the present invention is to provide a blade supporting head which is able to provide a very sensitive adjustment of the contact pressure of the blades on the nozzle.

Within the scope of this aim, an object of the invention is to provide a blade supporting head which is constructively simple and safely reliable in operation.

This aim and this object are achieved, according to the invention, by the present blade supporting head for devices for granulating plastic materials, characterized in that it comprises a supporting element which can be fixed to a drive shaft in front of a nozzle, at least one cylindrical seat which is defined in said support and is arranged in a plane which is at right angles to said shaft, at least one pin comprising a portion rotatably supported in said seat and to which a radial elastic tongue is coupled, and a portion which protrudes outside said seat and to which a blade is rigidly coupled, screw means being provided to load said tongue so as to move the cutting edge of said blade into contact with the skimming surface of said nozzle.

The details of the invention will become apparent from the detailed description of a preferred embodiment, illustrated only by way of non-limitative example in the accompanying drawings, wherein:

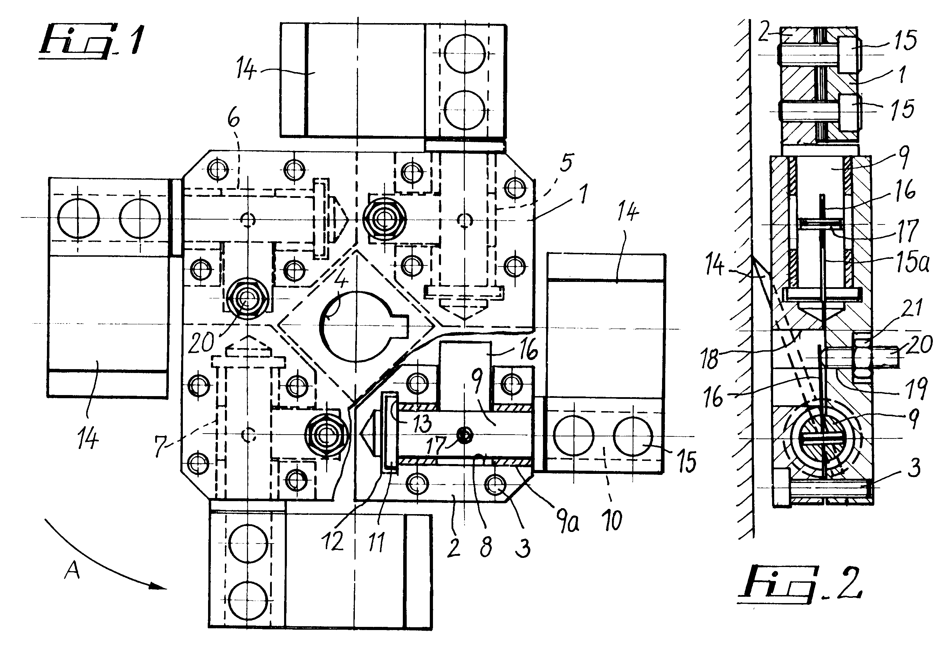

figure 1 is a partially sectional front view of the head according to the invention;
figure 2 is a transverse sectional view of the head of figure 1.

With reference to the above figures, the blade supporting head comprises a plate 1 which is shaped substantially like a square; polygonal plate-like blocks 2 are associated in the corners of said plate 1, and each one of said blocks is connected to said plate 1 by four screws 3. A through opening 4 is defined at the central region of the plate 1 and is provided with a seat for a key for keying the head on the drive shaft.

Complementary semi-cylindrical recesses are defined in the opposite faces of the plates and of the blocks 2 and define four cylindrical seats 5, 6, 7 and 8 which are mutually perpendicular and are open on the sides of the plate 1 proximate to the corners thereof. The seats 5-8 have axes which mutually intersect so as to form a square whose sides are parallel to the sides of the plate 1. Each one of the seats 5-8 accommodates a pin 9 which has an end 10 which protrudes out of the respective seat and has, around the opposite internal end, a collar 11 which engages an annular expansion 12 of the seat. Said expansion 12 defines an internal shoulder 13 against which the collar 11 rests, preventing the extraction of the pin 9 from the respective seat. Each pin 9 is rotationally supported by bushes 9a which are accommodated in the respective seat 5-8.

A blade 14 is mounted on the end 10 of the pins which protrudes laterally from the plate 1, and is fixed by means of screws 15.

A diametrical slot 15a is defined in the part of the pin 9 which is inside the seats 5-8, and a spring is inserted therein; said spring is constituted by an elastic tongue 16 which protrudes at right angles from the pin 9 and is locked by a dowel 17 which is diametrically inserted in the pin 9.

Each tongue 16 is accommodated in a recess 18 defined in the respective element 2, whereas a through threaded hole 19 is defined in the adjacent blocks 2 at the recess 18; a threaded stem 20 is screwed in said through hole 19 and has a locking nut 21 whose end acts as point of action on the tongue 16.

The method of use of the described head can be deduced from the above.

With methods which are conventional and accordingly are not illustrated, the head is mounted on the drive shaft and fixed in the operating position, wherein the blades skim the surface of the nozzle with their cutting edge.

The pressure of the blades against the nozzle is then adjusted by screwing or unscrewing the stems 20 so as to pre-load the elastic tongues 16, which by applying torsion to the pins 9 produce the required contact thrust with which the blades slide on the surface of the nozzle.

It is stressed that by virtue of the rotation of the head in the direction A, the elastic thrust generated by the tongues 16 combines with an axial component which is produced by the impact of the plastic material on the blades, which keeps said blade in contact with the surface of the nozzle, ensuring the clean cutting of the granules.

A substantial advantage of the present invention is constituted by the fact that the contact pressure can be adjusted in a simple and direct manner.

Numerous modifications and variations are possible in practical execution, and all are within the protective scope of the claims which follow.

In particular, the number of blades may vary freely according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Blade supporting head for devices for granulating plastic materials, characterized in that it comprises a supporting element (1,2) which can be fixed to a drive shaft in front of a nozzle, at least one cylindrical seat (5,6,7,8) which is defined in said support (1,2) and is arranged in a plane which is at right angles to said shaft, at least one pin (9) which comprises a portion (9a) which is rotatably supported in said seat (5,6,7,8) and to which a radial elastic tongue (16) is coupled, and a portion (10) which protrudes outside said seat and to which a blade (14) is rigidly coupled, screw means (20) being provided to load said tongue (16) so as to move the cutting edge of said blade (14) into contact with the skimming surface of said nozzle.

2. Head according to claim 1, characterized in that said tongue (16) is inserted and locked in a diametrical slot (15a) of said pin (9).

3. Head according to claim 1, characterized in that said supporting element comprises a plate (1) for keying on the drive shaft, a block (2) for each pin (9) being associated with said plate (1), recesses being defined in said plate and in said block (2), said recesses defining said seat (5,6,7,8), a recess (18) being defined in said block (2) for the accommodation of said tongue (16).

4. Head according to claim 3, characterized in that said screw means comprise a threaded stem (20) which is screwed into said plate (1) and acts on said tongue (16) with one end.

5. Head according to one or more of the preceding claims, characterized in that it comprises a square plate (1) on whose corners four blocks (2) are fixed, respective cylindrical seats (5,6,7,8,) being defined between said plate (1) and said blocks (2), said seats (5,6,7,8) being able to rotatably support the related pins (9) and having axes which define a square whose sides are parallel to the sides of said plate.
